# EUROPÄISCHE PATENTANMELDUNG

(11) **EP 4 613 359 A1**
(43) Veröffentlichungstag der Anmeldung: **10.09.2025**
(21) Anmeldenummer: 24020070.9
(22) Anmeldetag: 05.03.2024
(51) Int. Cl.: B01D 53/22

(54) **VERFAHREN ZUM AUFTRENNEN EINER KOHLENWASSERSTOFF-REICHEN, STICKSTOFF ENTHALTENDEN EINSATZFRAKTION**

(71) Anmelder: Linde GmbH, 82049 Pullach (DE)
(72) Erfinder: Kramer, Verena, 82049 Pullach (DE); Dick, Alexander, 82049 Pullach (DE); Bub, Andreas, 82049 Pullach (DE)
(74) Vertreter: Zahn, Christoph

(57) **Zusammenfassung**

Es wird ein Verfahren zum Auftrennen einer Kohlenwasserstoff-reichen, Stickstoff enthaltenden Einsatzfraktion (1), vorzugsweise Erdgas beschrieben, bei dem die Einsatzfraktion (1) permeativ (M, M') in eine an Stickstoff abgereicherte Retentat-Fraktion (2) und eine an Stickstoff angereicherte Permeat-Fraktion (3) aufgetrennt wird, wobei die permeative Auftrennung mittels wenigstens einer Keramikmembran (M, M') erfolgt.

## Beschreibung

Die Erfindung betrifft ein Verfahren zum Auftrennen einer Kohlenwasserstoff-reichen, Stickstoff enthaltenden Einsatzfraktion, vorzugsweise von Erdgas.

Sofern Erdgas durch ein Erdgasnetzwerk geleitet wird, darf der maximale Stickstoffgehalt üblicherweise 2,0 bis 7,0 Mol-% betragen. Wird das Erdgas verflüssigt, liegt diese Grenze bei 1 Mol-% Stickstoff im flüssigen Erdgasprodukt. Übersteigt der Stickstoffgehalt den erlaubten Grenzwert, ist eine Abtrennung des Stickstoffs vor der weiteren Verwendung, bspw. im Erdgasnetzwerk, oder vor der Weiterbehandlung bzw. Verflüssigung des Erdgases erforderlich.

Sog. Nitrogen Rejection Units (NRU) werden zur Abtrennung von Stickstoff aus Erdgas eingesetzt. Ein typisches Einsatzgas für eine NRU enthält neben den Hauptkomponenten Methan und Stickstoff weitere Kohlenwasserstoffe, wie Ethan, Propan, Butan und höhere Kohlenwasserstoffe. Darüber hinaus ist Kohlendioxid häufig in einer nicht vernachlässigbaren Menge enthalten; ferner ggf. Spuren anderer Bestandteile wie Sauerstoff, Wasser und/oder Schwefelverbindungen. Die Temperaturen in einer NRU liegen unterhalb -150 °C. Um eine Verlegung durch Komponenten zu vermeiden, die bei diesen Temperaturen gefrieren, bspw. schwerere Kohlenwasserstoffe, Kohlendioxid und Wasser, ist die Entfernung dieser Komponenten vor der NRU erforderlich.

Kohlendioxid wird normalerweise durch eine Amin-Wäsche entfernt, die eine Reihe verschiedener Säulen wie Wasch- und Regenerationssäule enthält. Darüber hinaus sind mehrere Pumpen, Wärmetauscher und Behälter erforderlich. Bei diesem Verfahren wird ein chemisches Lösungsmittel verwendet, das saure Gaskomponenten, wie Kohlendioxid chemisch absorbiert und eine chemische Verbindung bildet, die dann vom Erdgas abgetrennt wird. Der Erdgasstrom wird unten in die Kolonne eingespeist, während die Aminlösung in entgegengesetzter Richtung von oben nach unten durch die Kolonne zirkuliert. Ein sog. süßer Erdgasstrom verlässt den mit Wasser gesättigten Kopf der Säule. Der Kohlendioxid-reiche Aminstrom wird in einer separaten Kolonne durch Entfernung des Kohlendioxids regeneriert.

Das aus der Amin-Wäsche abgezogene Erdgas ist wassergesättigt, weswegen dieses Wasser aus dem Erdgas entfernt werden muss, bevor es der NRU zugeführt wird. Hierzu wird das Wasser mittels eines Adsoprtionsprozesses, vorzugsweise mittels eines TSA-Prozesses entfernt. Ein Adsorptionsverfahren umfasst typischerweise zwei oder mehr Adsorptionsbehälter, die jeweils ein Bett aus festem Adsorptionsmaterial enthalten. Der Erdgasstrom wird durch einen der Adsorber geleitet, wo die Wassermoleküle an der Oberfläche des Adsorptionsmaterials adsorbiert werden. Währenddessen wird der andere Adsorberbehälter regeneriert, indem er mit einem trockenen Gasstrom bei hohen Temperaturen gespült wird, um die Wassermoleküle wieder in den Gasstrom freizusetzen. Aus diesem Gasstrom wird Wasser abgetrennt und aus dem Prozess freigesetzt. Für die Regeneration sind verschiedene Geräte wie Kompressoren, Heizgeräte, Kühler und Behälter erforderlich. Um hohe Temperaturen für die Regeneration bereitzustellen, muss ein Heizmedium wie heißes Öl oder Dampf in ausreichender Menge bereitgestellt werden, wenn keine elektrische Erwärmung des Regenerationsgases vorgesehen ist. Das Kohlendioxid- und Wasser-freie Einsatzgas wird anschließend der NRU zugeführt.

Es gibt bereits Ansätze, die eine einstufige Vorbehandlungseinheit mit Gummimembran vorsehen, wie in der US 2023/0022033 beschrieben. Damit wird die Lücke zwischen der Zusammensetzung des Einsatzgases, die für einen sehr effizienten, kryogenen NRU-Prozess nicht geeignet ist, und der Zusammensetzung, die für einen solch effizienten Betrieb erforderlich ist, abgedeckt. Solche Anwendungen gelten im Wesentlichen nur für Einsatzgaszusammensetzungen mit niedrigem Stickstoffgehalt, vorzugsweise von weniger als 12 Mol-%, insbesondere weniger als 10 Mol-%, je nach erforderlicher Produktereinheit. Hiermit wird einerseits trotz einstufigen Membranprozess die erforderlich Produktreinheit vor allem im Hinblick auf Stickstoff im Permeat erreicht, andererseits aber auch eine ausreichende Anreicherung an Stickstoff im Retentate für eine effiziente kryogene Behandlung.Im Falle eines Stickstoffgehalts im Einsatzgas von mehr als 10 bzw. 12 Mol-% reicht ein einstufiges Membranverfahren in der Regel nicht mehr aus, um Stickstoff in einem solchen Ausmaß abzutrennen, dass das Produktgas, das die kryogene Trenneinheit umgehen soll, bereits die Produktanforderungen erfüllt. Für eine solche Anwendung ist eine zweistufige Gummimembraneinheit erforderlich, die einen zusätzlichen Permeatkompressor erfordert. Derartige Systeme sind vergleichsweise komplex und kostenintensiv.

In der CA 2698007 wird ein Prozess beschrieben, bei dem eine gummiartige Membran zur Trennung von Methan und Stickstoff verwendet wird. Der Stickstoff wird im Hochdruck-Retentat angereichert, während das Methan im Niederdruck-Permeat angereichert wird. Das Retentat wird in einem kryogenen Trennabschnitt weiterverarbeitet und das gereinigte Niederdruck-Methan wird nach Wärmeintegration mit dem Niederdruck-Permeat aus der Membraneinheit gemischt.

Die oben gezeigten Ansätze bieten zwar ausreichende Lösungen für die Trennung von Methan-Stickstoff Gemischen mit niedrigen Stickstoffgehalten, haben aber deutliche Nachteile bezüglich zusätzlich notwendigen Anlagenkomponenten sowie erhöhte Betriebskosten bei hohen Stickstoffgehalten.

Sofern der Stickstoffgehalt in der Einsatzfraktion so hoch ist, dass durch einen einstufigen Membranprozess keine ausreichende Stickstoffabtrennung mehr erfolgt, um die erforderliche Produktspezifikation zu erzielen, sind weitere Prozessschritte notwendige, wie das Vorseheneiner zweiten Membranstufe mit notwendiger Zwischenverdichtung. Durch die hierdurch verursachten höheren Installations- und Betriebskosten, bieten sich momentan keine Vorteile mehr gegenüber einem herkömmlichen NRU-Prozess.

Die vorbeschriebenen Verfahrensführungen erfordern jedoch in den meisten Fällen eine der Membran nachgeschaltete Verdichtung des Methan-angereicherten Niederdruck-Permeats, sofern das Permeat wieder unter nahezu gleichem Druck wie die Einsatzfraktion, zumindest aber unter höherem Druck als das Niederdruck-Permeats abgegeben werden soll.

Aufgabe der vorliegenden Erfindung ist es, ein Verfahren zum Auftrennen einer Kohlenwasserstoff-reichen, Stickstoff enthaltenden Einsatzfraktion, vorzugsweise von Erdgas anzugeben, das die Nachteile des vorbeschriebenen Standes der Technik vermeidet, insbesondere einen geringeren Verdichter-Energiebedarf sowie Investitionskosten aufweist und bei dem die an Stickstoffabgereicherte (Produkt)Fraktion als Retentat unter Hochdruck vorliegt.

Zur Lösung dieser Aufgabe wird ein Verfahren zum Auftrennen einer Kohlenwasserstoff-reichen, Stickstoff enthaltenden Einsatzfraktion vorgeschlagen, das dadurch gekennzeichnet ist, dass die Einsatzfraktion permeativ in eine an Stickstoff abgereicherte Fraktion - im Folgenden als Retentatstrom oder -fraktion bezeichnet - und eine an Stickstoff angereicherte Fraktion - im Folgenden als Permeatstrom oder -fraktion bezeichnet - aufgetrennt wird, wobei die permeative Auftrennung mittels wenigstens einer Keramikmembran erfolgt.

Weitere vorteilhafte Ausgestaltungen des erfindungsgemäßen Verfahrens zum Auftrennen einer Kohlenwasserstoff-reichen, Stickstoff enthaltenden Einsatzfraktion sind dadurch gekennzeichnet, dass
- die permeative Auftrennung mittels einer Membranstufe oder mehrerer, hintereinander geschalteter Membranstufen erfolgt,
- neben wenigstens einer Keramikmembran wenigstens eine Nicht-Keramikmembran, bspw. eine gummiartige Membran eingesetzt wird,
- die an Stickstoff abgereicherte Retentat-Fraktion und/oder die an Stickstoff angereicherte Permeat-Fraktion verdichtet werden,
- die an Stickstoff angereicherte Permeat-Fraktion in einem kryogenen Trennprozess in eine Stickstoff-reiche Fraktion und eine Methan-reiche Fraktion aufgetrennt wird,
- sofern die Einsatzfraktion neben Kohlenwasserstoffen und Stickstoff Kohlendioxid enthält, die an Stickstoff und Kohlendioxid angereicherte Permeat-Fraktion einer Kohlendioxid-Abtrennung, vorzugsweise einer Amin-Wäsche unterworfen wird,
- die an Stickstoff angereicherte Permeat-Fraktion einem Adsorptions-Prozess unterworfen wird, der der Abtrennung von Kohlendioxid, Wasser und/oder C₂₊-Kohlenwasserstoffen dient, wobei der Adsorptions-Prozess vorzugsweise als PSA-, TSA- oder iTSA-Prozess ausgebildet ist,
- der permeativen Auftrennung wenigstens ein Abtrennprozess vorgeschaltet ist, der der Abtrennung von in der permeativen Auftrennung unerwünschten Komponenten dient,
- die der permeativen Auftrennung zugeführte Einsatzfraktion abgekühlt wird, vorzugsweise auf eine Temperatur zwischen -80 und 30 °C abgekühlt wird, und
- sofern die an Stickstoff angereicherte Permeat-Fraktion einem kryogenen Trennprozess zugeführt wird, die der permeativen Auftrennung zugeführte Einsatzfraktion gegen einen geeigneten Verfahrensstrom des kryogenen Trennprozesses abgekühlt wird.

Erfindungsgemäß erfolgt nunmehr ein permeatives Auftrennen der Kohlenwasserstoff-reichen, Stickstoff enthaltenden Einsatzfraktion mittels einer Keramikmembran in eine an Stickstoff abgereicherte und eine an Stickstoff angereicherte Fraktion. Mit der Verwendung dieses Membrantyps wird der Stickstoff im Niederdruck-Permeat angereichert, während das Retentat im Stickstoffgehalt reduziert und die Produktspezifikation, zumindest hinsichtlich des Stickstoffgehalts, oftmals bereits erfüllt wird. Sofern weitere, unerwünschte Komponenten, wie höhere Kohlenwasserstoffe, Kohlendioxid, Wassser, etc. im Retentat- und/oder Permeatstrom vorhanden sind, können diese mittels geeigneter Abtrennprozesse entfernt werden, sofern dies notwendig ist. Hierbei können diese Abtrennprozesse der Membraneinheit vor- und/oder nachgeschaltet sein. Sofern derartige Komponenten schädlich für die Membraneinheit im Hinblick auf eine verringerte Leistung sind oder deren Lebensdauer verkürzen, wäre ein Abtrennprozess der Membraneinheit vorzuschalten.

Das erfindungsgemäße Verfahren zum Auftrennen einer Kohlenwasserstoff-reichen, Stickstoff enthaltenden Einsatzfraktion weist folgende Verbesserungen und Vorteile auf:
- Insbesondere bei hohen Stickstoffkonzentrationen im Einsatzgas OPEX- und CAPEX-Reduzierung der Permeatstromvorbehandlung und des kryogenen Abschnitts, da der größte Teil des Einsatzgases die einstufige Membraneinheit verlässt und das Retentat die Produktspezifikation hinsichtlich des Stickstoffgehalts üblicherweise bereits erfüllt; der ggf. vorzusehende kryogene Abschnitt mit notwendiger Vorbehandlung, wie Amin-Wäsche und Trocknung mit nachgeschalteter Verdichtung, wird lediglich mit einem kleineren Massenstrom belastet, weswegen er kleiner dimensioniert sein kann
- Reduzierung der beweglichen bzw. rotierenden Ausrüstung, da die Membraneinheit nur die Membranmodule und einige Steuerventile enthält, möglicherweise eine vorgeschaltete Heizung oder Trenntrommel, um den Taupunkt einzustellen und potenzielle Flüssigkeiten abzutrennen.
- Schnellerer Teilproduktionsstart, da die Inbetriebnahme einer Membraneinheit aufgrund ihres einfachen und robusten Prozessdesigns in der Regel recht schnell erfolgt. Daher kann innerhalb kurzer Zeit eine erhebliche Menge an spezifikationsgerechtem, Methan-reichem Produktgas produziert werden.
- Reduziertes Abfackeln, da die nachgeschalteten Permeatstrom-Bearbeitungseinheiten im Vergleich zu modernsten NRU-Technologien weniger Erdgas verarbeiten.
- Da diese Einheiten außerdem kleiner dimensioniert sind, sind mit ihrem Betrieb auch geringere Betriebskosten verbunden.

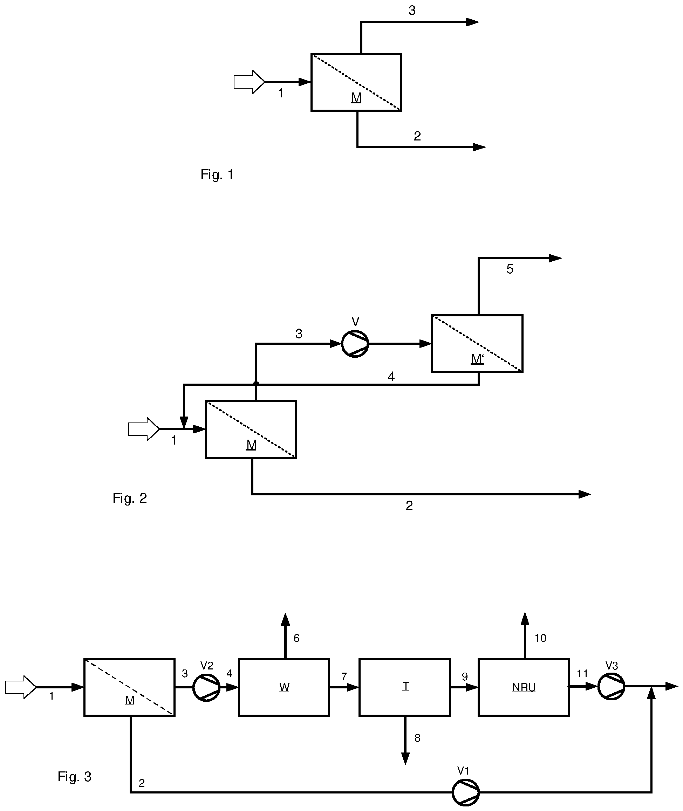

Das erfindungsgemäße Verfahren zum Auftrennen einer Kohlenwasserstoff-reichen, Stickstoff enthaltenden Einsatzfraktion sowie weitere vorteilhafte Ausgestaltungen desselben seien nachfolgend anhand der in den Figuren 1 bis 3 dargestellten Ausführungsbeispiele näher erläutert.

Bei der in der **Figur 1** dargestellten Verfahrensführung wird die Kohlenwasserstoff-reiche, Stickstoff enthaltende Einsatzfraktion 1 erfindungsgemäß einer einstufigen Keramikmembraneinheit M zugeführt. In dem aus der Membraneinheit M abgezogenen Stickstoff-abgereicherten Retentatstrom 2 ist der Stickstoff-Gehalt gegenüber dem Stickstoff-Gehalt der Einsatzfraktion 1 wesentlich reduziert und erfüllt im besten Fall bereits die gewünschte Produktspezifikation, während der Methan-Gehalt gegenüber dem Methan-Gehalt der Einsatzfraktion 1 wesentlich erhöht ist. Der Retentatstrom 2 kann nunmehr direkt in ein vorhandenes Erdgasnetz eingespeist werden. Sollte eine Verdichtung des Retentatstroms 2 vor dieser Einspeisung erforderlich sein, bewegt sich diese im Bereich weniger hundert Millibar.

Der Stickstoff-angereicherte Permeatstrom 3 kann unmittelbar weiterverwendet werden, bspw. als Brenngas zur Strom- oder Wärmeerzeugung; grundsätzlich ist jede Vewendung, die die Zusammensetzung des Permeatstroms ermöglicht, denkbar.

Die in der **Figur 2** dargestellte Verfahrensführung zeigt eine zweistufige Membraneinheit, bestehend aus zwei hintereinander angeordneten Keramikmembranen M und M'. Der aus der ersten Membraneinheit M abgezogene Retentatstrom wird vorzugsweise komprimiert V und in einer zweiten Keramikmembran M' wieder in einen zweiten an Stickstoff-angereicherten Permeatstrom 5 und einen zweiten an Stickstoff-abgereicherten Retentatstrom 4 aufgetrennt. Letzterer wird vor die erste Membraneinheit M zurückgeführt, um Methanverluste zu minimieren. Der Einsatz von zwei oder mehr Membranstufen ermöglicht hohe Rückgewinnungsraten von Methan.

Die in den Figuren 1 und 2 dargestellten Verfahrensführungen eignen sich insbesondere bei kleinen Gasfeldern, bei denen die Installation einer NRU möglicherweise nicht wirtschaftlich ist. Die Verwendung einer Keramikmembran ermöglicht die wirtschaftliche Erschließung derartiger Gasfelder. Der aus der (ersten) Membraneinheit M abgezogene Methan-angereicherte Retentatstrom kann im Regelfall direkt zur Produktempfangsanlage, bspw. einer Erdgasverflüssigungsanlage oder dem Erdgasnetz zugeführt werden.

Die **Figur 3** zeigt eine Verfahrensführung, bei der die Kohlenwasserstoff-reiche, Stickstoff enthaltende Einsatzfraktion 1, die zusätzlich höhere Kohlenwasserstoffe und Kohlendioxid enthält, in einer Keramikmembraneinheit M in einen Stickstoff-abgereicherten, Methan-reichen Retentatstrom 2 und einen Stickstoff-angereicherten Permeatstrom 3 aufgetrennt wird. Der Stickstoffgehalt des Retentatstroms 2 liegt hierbei vorzugsweise bereits unter der akzeptablen Grenze. Sofern dieser Strom in ein Produktaufnahmesystem, bspw. eine Rohrleitung, mit dem gleichen Druck wie das Einsatzgas eingespritzt werden soll, ist ein kleines Gebläse V1 vorzusehen, um den Retentatdruck wieder auf das Rohrleitungsdruckniveau zu erhöhen. Da der Druckabfall des Retentats innerhalb der Membraneinheit M gering ist - er beträgt weniger als 1 bar, üblicherweise weniger als 500 mbar -, ist auch die erforderliche Leistung des Gebläses V1 gering.

Der aus der Membraneinheit M abgezogene Stickstoff-angereicherte Permeatstrom 3 wird vor der Zufühung in eine, der Abtrennung des Kohlendioxid dienenden Amin-Wäsche W auf einen Druck zwischen 20 und 70 bar verdichtet V2. Diese Amin-Wäsche kann entfallen, sofern der Kohlendioxid-Gehalt im Permeat nach der Membraneinheit weniger als 500 ppmv, vorzugsweise weniger als 300 ppmv, insbesondere weniger als 50 ppmv aufweist. Das in der Amin-Wäsche W abgetrennte Kohlendioxid wird über Leitung 6 abgezogen und der von Kohlendioxid weitgehend gereinigte Wasser-gesättigte Permeatstrom 7 einer vorzugsweise adsorptiv arbeitenden Dehydrierungseinheit T zugeführt. Aus dieser wird über Leitung 8 das abgetrennte Wasser abgezogen, während der getrocknete Permeatstrom 9 der kryogenen Stickstoff-Abtrenneinheit NRU zugeführt und in dieser in eine Stickstoff-reiche Fraktion 10 und eine Methan-reiche Produktfraktion 11 aufgetrennt wird. Letztere wird ggf. auf den Abgabedruck verdichtet V3 und gemeinsam mit dem (verdichteten) Retentatstrom 2 Produktaufnahmesystem zugeführt.

Basierend auf dem Stickstoffgehalt in der Einsatzfraktion 1 und dem Stickstoffgehalt in der Produktfraktion 11, der durch die einstufige Membraneinheit M erreicht wird, kann ein erheblicher Retentatfluss erreicht werden, der zwischen 30 und 90 %, vorzugsweise zwischen 50 und 70 % des Einsatzfraktion-Flusses liegt. Der Permeatstromfluss 3 beträgt zwischen 10 und 70 % des Einsatzfraktion-Flusses, vorzugsweise zwischen 30 und 50 %. Abhängig von den gewählten Prozessbedingungen, wie Druck, Temperatur, Zusammensetzung usw., können das Retentat- und Permeatflussverhältnis auch höher oder niedriger sein. Im Vergleich zu einer herkömmlichen Verfahrensführung, bei der auf die permeative Auftrennung M verzichtet wird, können die Amin-Wäsche W, die Dehydratisierungseinheit T sowie die NRU folglich kleiner dimensioniert werden.

Aufgrund der erfindungsgemäß vorzusehenden Keramikmembraneinheit kann nunmehr eine erhebliche Menge an spezifikationsgerechtem Produktgas einfacher und schneller produziert werden, ohne die NRU zu starten, im Vergleich zu einem zum Stand der Technik zählenden Trennverfahren. Bei diesem dauert die Inbetriebnahme, einschließlich des Beginns der Vorbehandlung, aller rotierenden Geräte und des Abkühlens des Kryobereichs in der Regel mehrere Tage. Während der Inbetriebnahme muss bisher eine erhebliche Menge Einsatz- bzw. Erdgas abgefackelt werden. Durch den Einsatz einer Membraneinheit können die nachgeschaltete Vorbehandlung und kryogene Trennung kleiner dimensioniert werden, was den Umfang der Abfackelung reduziert.

Die vorbeschriebene Verfahrensführung ist zudem robuster gegenüber Prozessstörungen oder Ausfällen von Prozesseinheiten. Bisher führt ein Ausfall kritischer Geräte der Amin-Wäsche, der Dehydratisierungseinheit oder der NRU zum Verlust der gesamten Produktionskapazität. Mithilfe der vergleichsweise robusten Membranvorbehandlung kann eine erhebliche Menge an Produktgas bereitgestellt werden, selbst wenn eine der vorgenannten Einheiten ausfallen.

In den Figuren 1 bis 3 nicht dargestellt ist eine weitere vorteilhafte Ausgestaltung der Erfindung gemäß der die der permeativen Auftrennung M, M' zugeführte Einsatzfraktion 1 abgekühlt, vorzugsweise auf eine Temperatur zwischen -80 und 30 °C abgekühlt wird. Sofern, wie in der Figur 3 dargestellt, die an Stickstoff angereicherte Fraktion 3 einem kryogenen Trennprozess NRU zugeführt wird, wird die Einsatzfraktion 1 in vorteilhafter Weise gegen einen geeigneten Verfahrensstrom der NRU abgekühlt. Mittels dieser Ab- bzw. Vorkühlung steigt die Selektivität der Stickstoff-Methan-Auftrennung.

## Patentansprüche

1. Verfahren zum Auftrennen einer Kohlenwasserstoff-reichen, Stickstoff enthaltenden Einsatzfraktion (1), vorzugsweise Erdgas, **dadurch gekennzeichnet, dass** die Einsatzfraktion (1) permeativ (M, M') in eine an Stickstoff abgereicherte Retentat-Fraktion (2) und eine an Stickstoff angereicherte Permeat-Fraktion (3) aufgetrennt wird, wobei die permeative Auftrennung mittels wenigstens einer Keramikmembran (M, M') erfolgt.

2. Verfahren nach Anspruch 1, **dadurch gekennzeichnet, dass** die permeative Auftrennung (M, M') mittels einer Membranstufe oder mehrerer, hintereinander geschalteter Membranstufen erfolgt.

3. Verfahren nach Anspruch 2, **dadurch gekennzeichnet, dass** neben wenigstens einer Keramikmembran (M, M') wenigstens eine Nicht-Keramikmembran eingesetzt wird.

4. Verfahren nach Anspruch 1 bis 3, **dadurch gekennzeichnet, dass** die an Stickstoff abgereicherte Retentat-Fraktion (2) und/oder die an Stickstoff angereicherte Permeat-Fraktion (3) verdichtet werden (V, V1, V2, V3).

5. Verfahren nach Anspruch 1 bis 4, **dadurch gekennzeichnet, dass** die an Stickstoff angereicherte Permeat-Fraktion (3) in einem kryogenen Trennprozess (NRU) in eine Stickstoff-reiche Fraktion (10) und eine Methan-reiche Fraktion (11) aufgetrennt wird.

6. Verfahren nach Anspruch 1 bis 5, wobei die Einsatzfraktion (1) neben Kohlenwasserstoffen und Stickstoff Kohlendioxid enthält, **dadurch gekennzeichnet, dass** die an Stickstoff und Kohlendioxid angereicherte Permeat-Fraktion (3) einer Kohlendioxid-Abtrennung, vorzugsweise einer Amin-Wäsche (W) unterworfen wird.

7. Verfahren nach Anspruch 1 bis 6, **dadurch gekennzeichnet, dass** die an Stickstoff angereicherte Permeat-Fraktion (3) einem Adsorptions-Prozess (T) unterworfen wird, der der Abtrennung von Kohlendioxid, Wasser und/oder C₂₊-Kohlenwasserstoffen dient, wobei der Adsorptions-Prozess (T) vorzugsweise als PSA-, TSA- oder iTSA-Prozess ausgebildet ist.

8. Verfahren nach Anspruch 1 bis 7, **dadurch gekennzeichnet, dass** der permeativen Auftrennung (M, M') wenigstens ein Abtrennprozess vorgeschaltet ist, der der Abtrennung von in der permeativen Auftrennung (M, M`) unerwünschten Komponenten dient.

9. Verfahren nach Anspruch 1 bis 8, **dadurch gekennzeichnet, dass** die der permeativen Auftrennung (M, M') zugeführte Einsatzfraktion (1) abgekühlt wird, vorzugsweise auf eine Temperatur zwischen -80 und 30 °C abgekühlt wird.

10. Verfahren nach Anspruch 9, wobei die an Stickstoff angereicherte Permeat-Fraktion (3) einem kryogenen Trennprozess (NRU) zugeführt wird, **dadurch gekennzeichnet, dass** die der permeativen Auftrennung (M, M') zugeführte Einsatzfraktion (1) gegen einen geeigneten Verfahrensstrom des kryogenen Trennprozesses (NRU) abgekühlt wird.
